Europäisches Patentamt

European Patent Office

Office européen des brevets

(11) Veröffentlichungsnummer: **0 282 883**
**B1**

# (12) EUROPÄISCHE PATENTSCHRIFT

(45) Veröffentlichungstag der Patentschrift:
17.10.90

(51) Int. Cl.⁵: **B60K 15/035**

(21) Anmeldenummer: 88103677.6

(22) Anmeldetag: 09.03.88

(54) Entlüftungsventil zum Entlüften von Kraftstoffbehältern.

(30) Priorität: 14.03.87 DE 3708323

(43) Veröffentlichungstag der Anmeldung:
21.09.88 Patentblatt 88/38

(45) Bekanntmachung des Hinweises auf die Patenterteilung:
17.10.90 Patentblatt 90/42

(84) Benannte Vertragsstaaten:
DE FR GB IT SE

(56) Entgegenhaltungen:
EP-A- 0 011 247
WO-A-86/02888
DE-U- 8 001 996
FR-A- 603 329
FR-A- 603 329

(73) Patentinhaber: Adam Opel Aktiengesellschaft,
Bahnhofsplatz 1 Postfach 17 10,
D-6090 Rüsselsheim(DE)

(72) Erfinder: Schmidt, Wilfried, Kurmainzstrasse 15,
D-6530 Bingen 16(DE)
Erfinder: Menck, Lothar, Dipl.-Ing., Kammerhofweg 31,
D-6086 Riedstadt(DE)

(74) Vertreter: Bergerin, Ralf, Dipl.-Ing. et al, Adam Opel
Aktiengesellschaft Bahnhofplatz 1 Postfach 17 10,
D-6090 Rüsselsheim(DE)

ACTORUM AG

## Beschreibung

Die Erfindung bezieht sich auf ein Entlüftungsventil zum Entlüften von Kraftstoffbehältern in Kraftfahrzeugen, welche eine eine Ventilkugel aufweisende Ventilkammer mit einer in Normallage des Kraftfahrzeugs den Kraftstoffbehälter mit der Atmosphäre verbindenden Entlüftungsbohrung hat und bei dem die Ventilkammer einen bei Schräglage oder Überkopflage des Kraftfahrzeugs von der Ventilkugel dichtend verschließbaren Ventilsitz aufweist. Ein solches Entlüftungsventil ist Gegenstand der DE-A 2 848 546.

Das bekannte Entlüftungsventil verhindert, daß bei starker Schräglage oder gar Überkopflage des Kraftfahrzeugs Kraftstoff über die Entlüftungsleitung nach außen gelangen kann. Weiterhin wird mit dem Entlüftungsventil bei ausreichend großem Querschnitt der Entlüftungsbohrung erreicht, daß sich im Kraftstoffbehälter kein erheblicher Überdruck bildet, der zu einem Verformen und im Extremfall sogar zu einer Zerstörung des Kraftstoffbehälters führen kann.

In jüngster Zeit widmet man dem Problem zunehmend Aufmerksamkeit, daß es nach einem vollständigen Betanken bei starker Hitze infolge der dann eintretenden Ausdehnung des Kraftstoffes zu einem Überlaufen des Kraftstofftankes kommen kann. Dem könnte man durch eine Entlüftungsbohrung begegnen, die so eng ist, daß während des Betankens die Luft nicht so schnell aus dem Kraftstoffbehälter entweichen kann, wie Kraftstoff in ihn hineinfließt. Dadurch steigt kurz vom dem vollständigen Füllen der Druck im Kraftstoffbehälter so weit an, daß das Einfüllrohr vollgetankt wird, und damit ein voller Tankzustand simuliert wird, der zum Abbruch des Nachfüllvorganges führt. Da sich anschließend der Überdruck weiterhin langsam über die Entlüftungsbohrung abbaut, sinkt der Kraftstoffstand im Einfüllrohr ab. Im Kraftstoffbehälter verbleibt auf diese Weise oberhalb des Kraftstoffspiegels freier Raum, der für eine Kraftstoffausdehnung zur Verfügung steht.

Ist der Querschnitt der Entlüftungsbohrung klein genug, daß der vorgenannte Effekt einer nicht vollständigen Befüllung des Kraftstoffbehälters eintritt, dann kann jedoch bei plötzlicher Erwärmung des Kraftstoffes und starken Schüttelbewegungen des Fahrzeuges das sich im Kraftstoffbehälter bildende Gasgemisch über die Entlüftungsbohrung nicht schnell genug entweichen, so daß sich im Kraftstoffbehälter ein diesen verformenden oder in Extremfällen sogar zerstörenden Überdruck aufbaut. Mithin ergibt sich für den Konstrukteur bei der Bemessung der Entlüftungsbohrung das Dilemma, mit Erfüllen der Forderung nach einem raschen Druckabbau die ebenfalls angestrebte nicht vollständige Füllmöglichkeit des Kraftstoffbehälters nicht mehr erreichen zu können.

Durch die FR-A 603 329 ist es auch schon bekannt, in einer Entlüftungsbohrung ein zur Atmosphäre hin öffnendes Rückschlagventil anzuordnen. Hierdurch wird erreicht, daß der Kraftstoffbehälter bei stehendem Fahrzeug keine Verbindung zur Atmosphäre hat, so daß kein gasförmiger Kraftstoff austreten kann. Die Schrift befaßt sich jedoch nicht mit dem Problem einer zu weit gehenden Befüllung eines Kraftstoffbehälters und betrifft zudem kein Entlüftungsventil, welches bei einer Schräglage oder Überkopflage des Kraftfahrzeugs die Entlüftungsöffnung automatisch schließt.

Der Erfindung liegt die Aufgabe zugrunde, ein Entlüftungsventil der eingangs genannten Art derart zu gestalten, daß infolge einer engen Entlüftungsbohrung beim Befüllen die Entlüftung langsam genug ist, um ein vollständiges Befüllen zu verhindern, ein für den Tank schädlicher, übermäßiger Druckaufbau während des Fahrbetriebes des Kraftfahrzeugs jedoch zuverlässig ausgeschlossen ist.

Diese Aufgabe wird erfindungsgemäß dadurch gelöst, daß zusätzlich zur Entlüfungsbohrung eine von einem zum Freien hin öffnenden Rückschlagventil gesteuerte Entlüftungsöffnung mit im Vergleich zur Entlüftungsbohrung großem Querschnitt vorgesehen ist.

Durch diese zusätzliche, von einem Rückschlagventil gesteuerte Entlüftungsöffnung wird erreicht, daß durch Öffnen des Rückschlagventils bei unerwünscht hohem Überdruck für den Kraftstoffbehälter schädliche Drücke vermieden werden. Gleichzeitig kann man jedoch die Schließkraft des Rückschlagventils und den Querschnitt der Entlüftungsbohrung so bemessen, daß beim Betanken des Kraftstoffbehälters kurz vor Erreichen einer vollständigen Füllung ein solcher Druck entsteht, daß Kraftstoff im Einfüllrohr ansteigt und unter Sicherstellung des gewünschten Freivolumens im Tank ein "Vollzustand" simuliert wird und es zu einem Abschalten im Zapfhahn kommt. Konstruktiv besonders einfach gestaltet sich das Entlüftungsventil, wenn das Rückschlagventil ein die Entlüftungsbohrung aufweisendes Schließglied hat, welches mit Vorspannung auf einem zweiten Ventilsitz des Entlüftungsventils aufsitzt.

Die bisher gebräuchlichen Entlüftungsventile können mit wenig Aufwand in die erfindungsgemäßen Entlüftungsventile umgewandelt werden, wenn gemäß einer anderen Ausgestaltung der Erfindung die Ventilkammer innerhalb eines zylindrischen Einsatzes vorgesehen ist, welcher in einem mittleren Bereich die Ventilkammer mit der Ventilkugel und den von der Ventilkugel verschließbaren, ersten Ventilsitz hat und bei dem oberhalb des ersten Ventilsitzes der zweite Ventilsitz mit dem die Entlüftungsöffnung steuernden Schließglied vorgesehen ist.

Vorteilhaft ist es auch, wenn das die zusätzliche Entlüftungsöffnung steurnde Schließglied innerhalb einer Kappe angeordnet ist, welche von oben her auf dem Einsatz sitzt und gegen die eine das Schließglied in Schließrichtung vorspannende Ventilfeder anliegt. Diese Kappe vermag auf einfache Weise die Ventilfeder aufzunehmen. Weiterhin wirkt die Kappe als Prallplatte für aus der Entlüftungsbohrung austretende Kraftstofftröpf chen, so daß diese zuverlässig aufgefangen werden und dadurch nicht in die Atmosphäre gelanangen können.

Besonders rasch und ohne Werkzeug ist die Kappe mit dem Schließglied und der Ventilfeder zu montieren, wenn gemäß einer anderen Ausgestaltung der Erfindung die Kappe mittels einer Rastverbindung am Einsatz gehalten ist.

Die Ventilfeder ist in der Kappe gut geführt, wenn das die zusätzliche Entlüftungsöffnung steuernde Schließglied einen die Entlüftungsbohrung aufweisenden, zylindrischen- Fortsatz hat, welcher mit Spiel in einen innenseitig an der Stirnseite der Kappe vorgesehenen, von der Ventilfeder umgebenen, zum Schließglied hin offenen Topf greift. Der Topf in der Kappe begrenzt weiterhin auf einfache Weise den maximal möglichen Öffnungsweg des Schließgliedes.

Zur weiteren Verbesserung der Führung der Ventilfeder trägt es bei, wenn das Schließglied einen nach oben gerichteten, den unteren Bereich der Ventilfeder umschließenden Federtopf hat.

Auch bei vollständig geöffnetem Schließglied ist sichergestellt, daß Gas nicht nur außen am Schließglied vorbei, sondern auch durch die Entlüftungsbohrung ins Freie gelangen kann, wenn in der Stirnfläche des Topfes der Kappe mehrere Ausnehmungen vorgesehen sind.

Ein zuverlässiges Schließen des Schließgliedes auch bei Schräglage relativ zu seinem Ventilsitz wird erreicht, wenn das zusätzliche Schließglied eine kugelkalottenförmige Dichtfläche zur Auflage auf den konischen Ventilsitz hat.

Eine andere, vorteilhafte Ausgestaltung der Erfindung besteht darin, daß das zusätzliche Schließglied mit einem Führungsbund in den Einsatz greift, welcher außenseitig bis zur Dichtfläche des Schließgliedes reichende Längsnuten aufweist. Durch dieses Merkmal ist das Schließglied auf einfache Weise im Einsatz geführt. Dennoch kann bei geöffnetem Schließglied das Gas infolge der Längsnuten gut zum geöffneten Ventilsitz gelangen.

Die Erfindung läßt zahlreiche Ausführungsformen zu. Eine davon sowie ein alternativ ausgeführtes Detail sind in der Zeichnung dargestellt und werden nachfolgend beschrieben. In der Zeichnung zeigen die

Fig. 1 einen oberen Bereich eines Einfüllrohres mit einem an ihm angeordneten, im Schnitt dargestellten Entlüftungsventil nach der Erfindung,

Fig. 2 einen Teilbereich des Entlüfungsventils nach Figur 1 im gegenüber Figur 1 um 90 Grad gedreht verlaufenden Schnitt,

Fig. 3 einen Schnitt durch ein Schließglied des Entlüftungsventils,

Fig. 4 eine Ansicht von unten auf das Schließglied gemäß Figur 3,

Fig. 5 eine Ansicht von unten auf eine Kappe des erfindungsgemäßen Entlüftungsventils,

Fig. 6 einen Längsschnitt durch einen oberen Bereich des erfindungsgemäßen Entlüftungsventils,

Fig. 7 eine stark vergrößerte Darstellung einer zweiten Ausführungsform eines Ventilsitzbereiches des Entlüftungsventils nach der Erfindung.

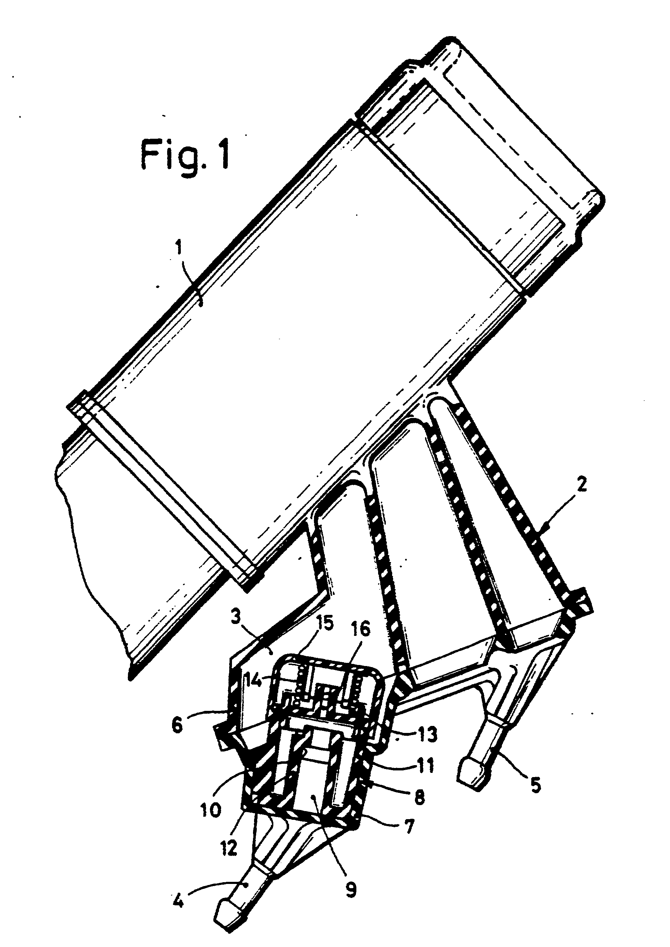

Die Figur 1 zeigt einen oberen Bereich eines Einfüllrohres 1 eines nicht dargestellten Kraftstoffbehälters. An diesem Einfüllrohr 1 ist ein Entlüftungsventil 2 angebracht, welches einen Auffangbehälter 3 hat, der zum Auffangen mitgerissenen Kraftstoffs dient. Das Entlüftungsventil 2 hat einen Leitungsanschluß 4, an dem eine nicht dargestellte, vom Kraftstoffbehälter hochgeführte Entlüftungsleitung anzuschließen ist. Weiterhin hat das Entlüftungsventil 2 einen Leitungsanschluß 5, an dem eine Leitung anzuschließen ist, die entweder zu einem Aktivkohlefilter oder unmittelbar ins Freie führt.

Das Entlüftungsventil 2 hat ein Gehäuse 6, welches nach unten hin als Ventiltopf 7 ausgebildet ist, in den von oben her ein zylindrischer Einsatz 8 eingesetzt ist. Dieser Einsatz hat eine flach ausgebildete Ventilkammer 9, die nach oben hin von einem ersten Ventilsitz 10 begrenzt wird.

Der Einsatz 8 hat eine zylindrische Außenwand 11, welche nach oben hin weiter reicht als ein mittlerer, die Ventilkammer 9 bildender Wandbereich 12. Von oben her sitzt auf der Außenwand 11 des Einsatzes 8 ein Schließglied 13, welches von einer Ventilfeder 14 in Schließstellung, also auf der Außenwand 11, gehalten wird. Hierzu stützt sich die Ventilfeder 14 einerseits auf dem Schließglied 13, andererseits gegen eine Kappe 15 ab, die am Einsatz 8 befestigt ist. Im Schließglied 13 ist eine Entlüftungsbohrung 16 vorgesehen, so daß bei Normalbedingungen Gas vom Leitungsanschluß 4 durch die Ventilkammer 9 zum Leitungsanschluß 5 gelangen kann.

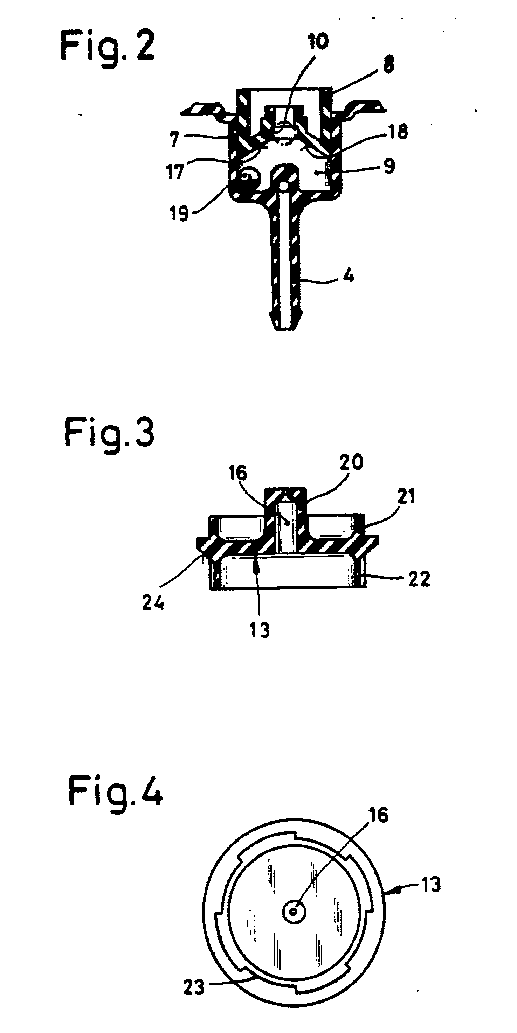

Die Figur 2 läßt erkennen, daß die Ventilkammer 9 im Einsatz 8 flach ausgebildet ist und nach oben hin zwei konvergierende, zum Ventilsitz 10 führende Schrägflächen 17, 18 hat. In der Ventilkammer 9 ist eine Ventilkugel 19 eingelegt, die bei extremer Schräglage oder gar Überkopflage des Fahrzeugs gegen den Ventilsitz 10 gelangt und dadurch die Entlüftung verschließt, so daß kein Kraftstoff austreten kann. Zusätzlich zu den beschriebenen Teilen läßt die Figur 2 den Ventiltopf 7 mit dem Leitungsanschluß 4 erkennen.

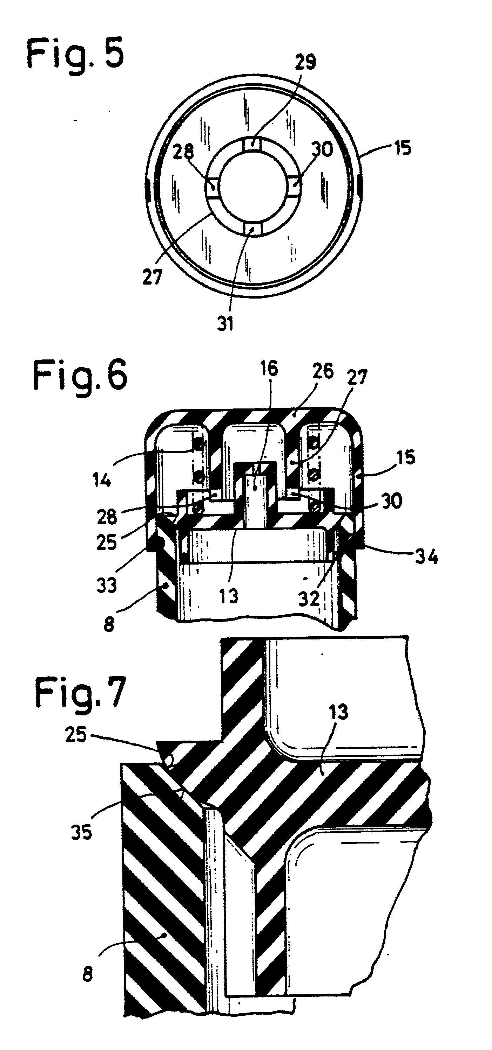

Die genaue Gestaltung des Schließgliedes 13 ergibt sich aus Figur 3. Diese zeigt, daß das Schließglied 13 einen nach oben gerichteten, zylinderischen Fortsatz 20 hat, in dem die Entlüftungsbohrung 16 vorgesehen ist. Diese verengt sich nach oben hin düsenartig auf einen Durchmesser von etwa 0,65 mm. Nach oben hin bildet das Schließglied 13 durch einen umlaufenden Steg einen Federtopf 21, in dem die in Figur 1 gezeigte Ventilfeder 14 zu sitzen vermag. Nach unten hin hat das Schließglied 13 einen Führungsbund 22, welcher in den Einsatz 8 zu greifen vermag, um das Schließglied 13 zu führen. Wie die Figur 4 zeigt, sind im Führungsbund 22 mehrere Längsnuten, beispielsweise eine Längsnut 23, vorgesehen, damit bei geöffnetem Schließglied 13 Gas außenseitig am Führungsbund 22 vorbei strömen kann. Wie Figur 3 desweiteren zeigt, besitzt das Schließglied 13 außenseitig eine konische Dichtfläche 24, mit der es auf einem in Figur 6 gezeigten, konischen Ventilsitz 25 des Einsatzes 8 zu sitzen vermag.

Die Figur 5 zeigt in Verbindung mit der Figur 6 die Gestaltung der Kappe 15. Diese hat innenseitig auf ihrer Stirnseite 26 einen nach innen gerichteten Topf 27, der in die Ventilfeder 14 greift. Wie die Figur 5 zeigt, weist dieser Topf 27 in seiner Stirnfläche vier Ausnehmungen 28, 29, 30, 31 auf. Hierdurch wird erreicht, daß auch dann noch im Inneren des Topfes 27 eine Verbindung nach außen besteht, wenn das Schließglied 13 vom Ventilsitz 25 abgehoben ist und gegen die Stirnfläche des Topfes 27 anliegt.

Die Figur 6 läßt weiterhin erkennen, daß die Kappe 15 mittels einer Rastverbindung 32 mit dem Einsatz 8 verbunden ist. Hierzu hat der Einsatz 8 außenseitig eine umlaufende Nut 33, in die die Kappe 15 mit einem innenseitig umlaufenden Wulst 34 eingeschnappt ist.

Die Figur 7 zeigt, daß das Schließglied 13 auch eine kugelkalottenförmige Dichtfläche 35 haben kann, mit der es auf dem Ventilsitz 25 des Einsatzes 8 aufsitzt.

Das beschriebene Entlüftungsventil arbeitet wie folgt. Wird der mit ihm ausgestattete Kraftstoffbehälter betankt, so strömt die vom Kraftstoff verdrängte Luft durch die Entlüftungsbohrung 16 zum Leitungsanschluß 5 und von dort nach außen. Da der Querschnitt der Entlüftungsbohrung relativ eng ist, bildet sich hierbei im Kraftstoffbehälter ein geringer Überdruck, der dafür sorgt, daß infolge eines Anstiegs des Kraftstoffes im Einfüllrohr vor einem vollständigen Füllen des Kraftstoffbehälters der Füllvorgang beendet wird, so daß im Kraftstoffbehälter ein geringes, nicht gefülltes Volumen verbleibt.

Kommt es im Kraftstoffbehälter zu einem plötzlichen, höheren Druckaufbau, so hebt das Schließglied 13 vom Ventilsitz 25 ab und verhindert einen weiteren, für den Kraftstoffbehälter schädlichen Druckaufbau.

## Patentansprüche

1. Entlüftungsventil (2) zum Entlüften von Kraftstoffbehältern in Kraftfahrzeugen, welche eine eine Ventilkugel (19) aufweisende Ventilkammer (9) mit einer in Normallage des Kraftfahrzeugs den Kraftstoffbehälter mit der Atmosphäre verbindenden Entlüftungsbohrung (16) hat und bei dem die Ventilkammer (9) einen bei Schräglage oder Überkopflage des Kraftfahrzeugs von der Ventilkugel (19) dichtend verschließbaren Ventilsitz (10) aufweist, <u>dadurch gekennzeichnet</u>, daß zusätzlich zur Entlüftungsbohrung (16) eine von einem zum Freien hin öffnenden Rückschlagventil (13, 14, 25) gesteuerte Entlüftungsöffnung mit im Vergleich zur Entlüftungsbohrung (16) großem Querschnitt vorgesehen ist.

2. Entlüftungsventil nach Anspruch 1, <u>dadurch gekennzeichnet</u>, daß das Rückschlagventil ein die Entlüftungsbohrung (16) aufweisendes Schließglied (13) hat, welches mit Vorspannung auf einem zweiten Ventilsitz (25) des Entlüftungsventils aufsitzt.

3. Entlüftungsventil nach den Ansprüchen 1 oder 2, <u>dadurch gekennzeichnet</u>, daß die Ventilkammer (9) innerhalb eines zylindrischen Einsatzes (8) vorgesehen ist, welcher in einem mittleren Bereich die Ventilkammer (9) mit der Ventilkugel (19) und den von der Ventilkugel (19) verschließbaren, ersten Ventilsitz (10) hat und bei dem oberhalb des ersten Ventilsitzes (10) der zweite Ventilsitz (25) mit dem die Entlüftungsöffnung steuernden Schließglied (13) vorgesehen ist.

4. Entlüftungsventil nach einem oder mehreren der vorangehenden Ansprüche, <u>dadurch gekennzeichnet</u>, daß das die zusätzliche Entlüftungsöffnung steuernde Schließglied (13) innerhalb einer Kappe (15) angeordnet ist, welche von oben her auf dem Einsatz (8) sitzt und gegen die eine das Schließglied (13) in Schließrichtung vorspannende Ventilfeder (14) anliegt.

5. Entlüftungsventil nach einem oder mehreren der vorangehenden Ansprüche, <u>dadurch gekennzeichnet</u>, daß die Kappe (14) mittels einer Rastverbindung (32) am Einsatz (8) gehalten ist.

6. Entlüftungsventil nach einem oder mehreren der vorangehenden Ansprüche, <u>dadurch gekennzeichnet</u>, daß das die zusätzliche Entlüftungsöffnung steuernde Schließglied (13) einen die Entlüftungsbohrung (16) aufweisenden, zylindrischen Fortsatz (20) hat, welcher mit Spiel in einen innenseitig an der Stirnseite (26) der Kappe (15) vorgesehenen, von der Ventilfeder (14) umgebenen, zum Schließglied (13) hin offenen Topf (27) greift.

7. Entlüftungsventil nach einem oder mehreren der vorangehenden Ansprüche, <u>dadurch gekennzeichnet</u>, daß das Schließglied (13) einen nach oben gerichteten, den unteren Bereich der Ventilfeder (14) umschließenden Federtopf (21) hat.

8. Entlüftungsventil nach einem oder mehreren der vorangehenden Ansprüche, <u>dadurch gekennzeichnet</u>, daß in der Stirnfläche des Topfes (27) der Kappe (15) mehrere Ausnehmungen (28 - 31) vorgesehen sind.

9. Entlüftungsventil nach einem oder mehreren der vorangehenden Ansprüche, <u>dadurch gekennzeichnet</u>, daß das zusätzliche Schließglied (13) eine kugelkalottenförmige Dichtfläche (35) zur Auflage auf den konischen Ventilsitz (25) hat.

10. Entlüftungsventil nach einem oder mehreren der vorangehenden Ansprüche, <u>dadurch gekennzeichnet</u>, daß das zusätzliche Schließglied (13) mit einem Führungsbund (22) in den Einsatz (8) greift, welcher außenseitig bis zur Dichtfläche (24, 35) des Schließgliedes (13) reichende Längsnuten (23) aufweist.

## Revendications

1. Soupape de dégagement d'air (2) pour des reservoirs de carburant de véhicules automobiles, comprenant une chambre de soupape (9) qui présente une bille de soupape (19) et un trou de dégagement d'air (16) reliant en position normale du véhicule automobile le réservoir de carburant à l'atmosphère, la chambre de soupape (9) présentant un siège de soupape (10) pouvant être fermé hermétiquement par la bille de soupape (19) en cas de position inclinée ou de position renversée du véhicule automobile, caractérisée en ce qu'en plus du trou de dégagement d'air (16), il est prévu une ouverture de dégagement d'air qui est commandée par un clapet antiretour (13, 14, 25) s'ouvrant vers l'extérieur et présente une section transversale plus grande que le trou de dégagement d'air (16).

2. Soupape de dégagement d'air selon la revendication 1, caractérisée en ce que le clapet antiretour possède un organe de fermeture (13) qui présente le trou de dégagement d'air (16) et porte avec préten-sion sur un deuxième siège de soupape (25) de la soupape de dégagement d'air.

3. Soupape de dégagement d'air selon la revendication 1 ou 2, caractérisée en ce que la chambre de soupape (9) est prévue à l'intérieur d'un insert cylindrique (8) qui possède dans une zone centrale la chambre de soupape (9) avec la bille de soupape (19) et le premier siège de soupape (10) pouvant être fermé par la bille de soupape (19) et dans lequel le deuxième siège de soupape (25) avec l'organe de fermeture (13) commandant l'ouverture de dégagement d'air est prévu au-dessus du premier siège de soupape (10).

4. Soupape de dégagement d'air selon l'une des revendications précédentes, caractérisée en ce que l'organe de fermeture (13) commandant l'ouverture supplémentaire de dégagement d'air est disposé à l'intérieur d'une coiffe (15) qui est disposée par le haut sur l'insert (8) et contre laquelle prend appui un ressort de soupape (14) prétendant l'organe de fermeture (13) dans le sens de fermeture.

5. Soupape de dégagement d'air selon l'une des revendications précédentes, caractérisée en ce que la coiffe (14) est maintenue sur l'insert (8) au moyen d'un assemblage à encliquetage (32).

6. Soupape de dégagement d'air selon l'une des revendications précédentes, caractérisée en ce que l'organe de fermeture (13) commandant l'ouverture supplémentaire de dégagement d'air possède un prolongement cylindrique (20) qui présente le trou de dégagement d'air (16) et s'engage avec du jeu dans un pot (27) prévu à l'intérieur sur le côté frontal (26) de la coiffe (15), entouré par le ressort de soupape (14) et ouvert vers l'organe de fermeture (13).

7. Soupape de dégagement d'air selon l'une des revendications précédentes, caractérisée en ce que l'organe de fermeture (13) possède une cuvette de ressort (21) orientée vers le haut et entourant la zone inférieure du ressort de soupape (14).

8. Soupape de dégagement d'air selon l'une des revendications précédentes, caractérisée en ce que plusieurs échancrures (28–31) sont prévues dans la surface frontale du pot (27) de la coiffe (15).

9. Soupape de dégagement d'air selon l'une des revendications précédentes, caractérisé en ce que l'organe de fermeture supplémentaire (13) possède une surface d'étanchéité (35) en forme de calotte sphérique destinée à prendre appui sur le siège de soupape conique (25).

10. Soupape de dégagement d'air selon l'une des revendications précédentes, caractérisée en ce que l'organe de fermeture supplémentaire (13) s'engage par un collet de guidage (22) dans l'insert (8) qui présente à l'extérieur des rainures longitudinales (23) s'étendant jusqu'à la surface d'étanchéité (24, 35) de l'organe de fermeture (13).

**Claims**

1. Ventilation valve (2) for ventilating fuel containers in motor vehicles, with a valve ball (19) in a valve chamber (9) (19) having a ventilation bore (16) which in the normal position of the vehicle connects the fuel container with the atmosphere, and in which the valve chamber (9) has a valve seat (10) which is sealingly closed by the valve ball (19) when the motor vehicle adopts a sloping or overhead position, characterised in that additionally to the ventilation bore (16) there is provided a ventilation opening, with a large diameter compared to that of the ventilation bore (16), which is controlled by a non-return valve opening to the open air.

2. Ventilation valve according to claim 1, characterised in that the non-return valve has a closure member (13), containing the ventilation bore (16), which is seated with predetermined stress on a second valve seat (25) of the ventilation valve.

3. Ventilation valve according to the claims 1 or 2, characterised in that the valve chamber (9) is provided within a cylindrical insert (8) which in a central region has the valve chamber (9) with the valve ball (19) and the first valve seat (10) closeable by the valve ball (19), and in which above the first valve seat (10) there is provided the second valve seat (25) with the closure member (13) controlling the ventilation opening.

4. Ventilation valve according to at least one of the aforementioned claims, characterised in that the closure member (13) controlling the additional ventilation opening is arranged inside a cap (15) which, seen from above, is seated on the insert (8) and rests against a valve spring (14) which prestresses the closure member (13) in the direction of closure.

5. Ventilation valve according to at least one of the aforementioned claims, characterised in that the cap (14) is held on the insert (8) by means of a snap-on connection (32).

6. Ventilation valve according to at least one of the aforementioned claims, characterised in that the closure member (13) which controls the additional ventilation bore has a cylindrical extension (20), containing the ventilation bore (16), which engages with play in a container (27) which opens towards the closure member (13), is surrounded by the valve spring (14), and is provided on the inside of the front face (26) of the cap (15).

7. Ventilation valve according to at least one of the aforementioned claims, characterised in that the closure member (13) has an upwardly directed spring container (21) which surrounds the lower region of the valve spring (14).

8. Ventilation valve according to at least one of the aforementioned claims, characterised in that a plurality of recesses (28–31) are provided in the forward area of the cup (27) of the cap (15).

9. Ventilation valve according to at least one of the aforementioned claims, characterised in that the additional closure member (13) has a calotte shell-like spherical sealing surface (35) for resting on the conical valve seat (25).

10. Ventilation valve according to at least one of the aforementioned claims, characterised in that the additional closure member (13) through a guide sleeve (22) engages the insert (8), which has longitudinal grooves (23) on the outside reaching to the sealing surface (24, 35) of the closure member (13).

Fig.1

# Fig. 2

# Fig.3

# Fig.4

# Fig. 5

# Fig. 6

# Fig. 7